Europäisches Patentamt

European Patent Office

Office européen des brevets

(11) Publication number : **0 601 933 A2**

# (12) EUROPEAN PATENT APPLICATION

(21) Application number : **93402973.7**

(22) Date of filing : **09.12.93**

(51) Int. Cl.⁵ : **G03G 5/06,** G03G 15/01

(30) Priority : **10.12.92 US 988770**

(43) Date of publication of application :
**15.06.94 Bulletin 94/24**

(84) Designated Contracting States :
**DE FR GB IT**

(71) Applicant : **MINNESOTA MINING AND
MANUFACTURING COMPANY
3M Center,
P.O. Box 33427
St. Paul, Minnesota 55133-3427 (US)**

(72) Inventor : **Zwadlo, Gregory L., c/o Minnesota
Mining and
Manufac. Company,
2501 Hudson Road,
P.O. Box 33427
St. Paul, Minnesota 55133-3427 (US)**

(74) Representative : **Warcoin, Jacques et al
Cabinet Régimbeau
26, avenue Kléber
F-75116 Paris (FR)**

(54) **Electrophotographic color proofing system for gravure printed images.**

(57) A color proofing system (10) effectively produces off-press proofs for gravure printed images using a high resolution electrophotographic printer by optimizing the deposition profile of a clustered dot cell of electrophotographically developed ink dots so as to more closely simulate the deposition profile of ink deposited in conventional and direct transfer (halftone) gravure printing processes. The three operating parameters of the electrophotographic process that are selectively modified during this process to produce are : (1) the spot image overlap of the laser beam profile ; (2) the charge differentiation between the non-charged and charged areas on the photoconductor ; and (3) the charge density associated with the toner particles deposited on the photoconductor surface. The gravure dot cells produced by this process can vary in both cell area and ink thickness. The resulting variation in ink thickness, graduated edge profile, and overlapping of adjacent gravure dot cells allows the ink deposited on top of a paper substrate by the electrophotographic process to more closely simulate the color and tone reproduction of ink that is absorbed into the paper in a gravure press printing. Thus, the tonal rendition of the finished off-press proof more accurately simulates gravure printing than any previously known gravure proofing process.

FIG.1

EP 0 601 933 A2

Jouve, 18, rue Saint-Denis, 75001 PARIS

## Technical Field

This invention relates to off-press systems for obtaining improved color proofs of gravure printed images. In particular, it relates to an electrophotographic method for optimizing the deposition profile and overall appearance of electrophotographically developed ink so as to closely simulate the image quality, color gamut, and tonal reproduction of ink deposited in both conventional and direct transfer (halftone) gravure printing processes.

## Background Art

Color proofing systems are well known in the printing art. The proofs that are generated by a color proofing system are used in the printing process to predict the appearance of a final printed image prior to making a production press run. By observing and analyzing the proof, the printer can make necessary changes to the press set up without wasting expensive press time, paper and ink. An excellent background of color proofing systems is set forth in Bruno, M., *Principles of Color Proofing,* GAMA Communications (1986).

Proofing systems are divided into two general types: press proofs and off-press proofs. So called "press proofs" are proofs made on a printing press, and require the making of plates, mounting of the plates on the press, making the press ready for a run, and actually running a limited number of prints. "Prepress" or "off-press" proofs use photochemical, photomechanical, or photoelectric processes that present a proof image that attempts to simulate the appearance of a press printed image. Off-press proofs are less expensive and faster to make than press proofs, since the proofs are created without the need for preparing and making plates, and running the plates on a printing press. The off-press proof provides control information that can be easily monitored and altered before thousands or tens of thousands of prints are made by the printing process.

In order to understand color proofing systems, it is important to understand the actual printing systems which the proofs are attempting to emulate. Commercial color reproduction in large quantities, such as color printing of newspapers or catalogs, is accomplished almost exclusively through a plate printing process. In a plate printing process, the image to be printed is produced once on a plate. The plate image is then inked and transferred or printed on a press for the number of copies desired. When color reproduction is desired, the plate printing process uses a color separation process based on the three color theory of light that separates an image into the three primary colors and then recombines the color separations in order to generate a full color gamut. In the plate printing process for color separation, three color separation plates are created using filters of the three additive primary colors blue, green and red. These color separation plates are then inked with the colors of the three subtractive primary colors, yellow, magenta, and cyan, and are printed over and next to each other on successive steps in order to reproduce the full color gamut. A fourth color plate with black ink, for example, is usually used in addition to the three subtractive primary colors to extend the tone range of the printed colors, thereby providing for neutral shadows, and offsetting the moire or objectionable screen patterns that are often found in three-color reproductions. In this way, thousands of images can be reliably and inexpensively duplicated.

There are three types of plate printing processes that are commonly used: letterpress, lithography and gravure. The gravure printing process provides for the highest quality color picture reproduction of the three commonly used plate printing processes. Gravure is an intaglio process wherein the image is engraved or depressed in the printing plate. Image areas are made up of cells or wells in the plate, and non-image areas are represented by the surface plane of the plate. During the printing process, the plate is passed or rotated through a bath of ink and then wiped by a scrapper or "doctor" blade, leaving the ink in the recessed wells of the plate. The ink is then directly transferred to paper or a similar substrate under pressure to form the printed image.

One of the unique advantages of gravure printing is that it is a contone, or continuous tone, printing process, as compared to the halftone processes that are used in lithography and letterpress printing. In a contone process the image is a continuous image with most of the area on the paper is covered with ink due to the overlapping and blending of the inked areas. In high resolution electrophotographic systems, the standard contone process utilizes clustered dot cells (e.g., 16x16 dots) that are dithered by filling in adjacent dots in a circular pattern starting from the center outward, for example, to create the variable size, continuous tone image. In contrast, in a halftone process, the image is a combination of discrete dots of ink that do not overlap or blend together. Unlike the standard contone process, in a conventional halftone process for a high resolution electrophotographic system, distributed dot cells are used to generate the print cell. Instead of being grouped together to form a single, variable size cell, the distributed dot cell is dithered or filled in with dots that are spaced apart from one another, but that are close enough together such that the appearance to the unaided eye is one of a more or less continuous picture. The advantage of a contone process is that it produces prints with higher brilliance and purity of color than prints generated by a halftone process using the same color pigments and grade of paper. Gravure printing processes can therefor print with poorer quality, but less expensive, pigments and papers, and still achieve the same reproduction quality as halftone printing processes such as lithography and letterpress printing.

Gravure printing is commercially accomplished in three different processes: conventional-variable depth, variable area/variable depth, and direct transfer-variable area. Conventional gravure uses plates in which all of the wells are of the same size and shape, but vary in depth. The tone range of the colors printed by the plates is provided by the different amounts of ink carried by the different well depths, i.e., deeper wells providing for more ink and therefore deeper printed colors. Variable area/variable depth gravure uses plates in which the wells vary in area, shape, and depth, resulting in ink deposition profiles that provide for a shorter but more controllable tone range. Direct transfer or variable area gravure uses plates in which the wells vary in area, but have essentially the same depth, resulting in ink deposition profiles that provide for a short but controllable tone range of the printed colors.

Conventional gravure printing is a pure contone tone process. The wells in the conventional gravure printing plate hold varying volumes of ink which print different amounts, densities, and strengths of ink. Relatively low viscosity ink is used in the conventional gravure process, and the ink deposited from adjacent wells during the printing process merges together to form a continuous image. Variable area/variable depth gravure is considered a combination halftone/contone process, and variable area (direct transfer) gravure is a halftone process. Even in the direct transfer gravure process, however, the deposition profile of the halftone dots is not sharp and highly contrasted, with ink being deposited in varying amounts between the individual dots. It is the merging of ink by the between dot deposition of ink in the direct transfer (halftone) gravure printing process and the variable area/variable depth combination halftone/contone gravure printing process, that in great part accounts for the excellent color performance of gravure printing, because even a small amount of ink deposited on the paper between dots can dramatically shift the color of the paper to that of the ink.

While the gravure printing process is particularly well adapted for color picture reproduction, its use generally has been limited to long run publications (150,000 copies or more), primarily because of the lack of suitable and effective off-press color proofing systems. The lack of an accepted off-press color proofing system for the gravure printing process has meant that press proofs must be used. This dependence on press proofing generally has prevented the use of gravure printing processes in the lucrative medium run publication, commercial and packaging markets because of the high preparatory costs and long lead times forced by the press proofing operation which is further aggravated by the high skill demands, lost production time and high costs of having to make manual color corrections on the printing plates.

In order to meet this need, three types of off-press color proofing systems that have been attempted for the gravure printing process. These include: (1) photographic color proofing systems; (2) adhesive polymer-dry toner color proofing systems; and (3) halftone electrophotographic color proofing systems. Each of these off-press color proofing systems is described in detail in Bruno, M., *Principles of Color Proofing,* GAMA Communications, Chpt. VIII, pgs. 193-212 (1986). To date, none of these three systems has been generally accepted by the printing industry as an effective and acceptable off-press color proofing system.

The most promising of these off-press color proofing systems is the electrophotographic proofing system. Electrophotography can be extremely well suited for color proofing. It uses a reusable light sensitive medium that can be quickly and cheaply reconfigured. A wide variety of proofing colors can be employed with essentially total transfer to the receptor paper. Perhaps most importantly to the proofing process, electrophotography provides for a high degree of control over each process step. The original method for electrophotographically producing full color reproductions was disclosed by C.F. Carlson in his early patent, U. S. Patent No. 2,297,691. Advances in electrophotography have enabled the development of highly effective and commercially viable electrophotographic based proofing systems for letterset and lithographic printing processes. A process for making high quality electrophotographic color prints using liquid toners that is particularly suited to color proofing for the halftone images associated with lithography and letter press printing processes is disclosed in U. S. Patent No. 4,728,983.

Unfortunately, the very fact which makes electrophotography so well suited for color proofing for lithography and letter press printing processes (i.e., that electrophotography is inherently a high contrast, halftone process), is a distinct disadvantage when attempting to use electrophotography as a color proofing system for the contone values generated by the gravure printing process. When the halftone process of electrophotography is used to simulate a contone image, it is necessary to devise some type of "transformation" technique that attempts to simulate a contone image on a halftone device. For low resolution images (i.e., less than 1,000 dots per inch (394 dots per centimeter)), this halftone-to-contone transformation can be accomplished by manipulating the digital representation of the image in software so as to allow the human eye to effectively perform the integration or smoothing process when viewing the actual printed image. However, for high resolution images of the type required by color proofing systems (i.e., greater than 1,000 dots per inch (394 dots per centimeter)), this type of software transformation alone is simply inadequate to generate the necessary degree of accuracy of reproduction required by a color proofing system. As a result, current high resolution electrophotographic processes that are used to simulate contone images rely on very precise control over the halftone dot sharpness in an effort to more accurately control the ink formations produced by the electrophotography process.

Recent improvements in the high resolution electrophotographic process have focused almost exclusively on improving halftone dot sharpness. For example, U. S. Patent No. 4,946,753 describes particular liquid inks that provide for high trap values when used in the '983 process. U. S. Patent No. 5,061,583 improves on the '983 process by describing a way to obtain very sharp or high contrast dots in a halftone process, even with a relatively low contrast laser beam. U. S. Patents 4,537,490, 5,021,807 and 5,025,272 all disclose various methods to improve halftone dot sharpness in a high resolution electrophotographic process. This emphasis in the art of obtaining higher contrast and sharpness in electrophotographically produced dots is understandable in that electrophotography is inherently a high contrast process.

Despite continued improvements in the control over the halftone dot sharpness, conventional high resolution electrophotographic processes have had limited success in simulating the contone deposition profile of gravure deposited inks. Some success has been achieved in the simulation of the deposition profile of high resolution halftone gravure printed dots using the variable area/direct transfer process; however, producing halftone gravure printed dots using this technique requires the use of higher quality pigments and papers in the variable area/direct transfer process gravure printing process, similar to those required by lithography and letter press printing processes. Thus, the advantage of conventional gravure printing processes, namely the ability to obtain high quality color images using lower quality pigments and papers, is sacrificed in order to provide an off-press color proofing system.

Accordingly, there is a need for a high resolution color proofing system that is capable of producing off-press proofs that can effectively simulate a contone printing process, such as the conventional gravure printing process. It would also be desirable to provide a high resolution color proofing system that could generate proofs for both conventional gravure printing processes, as well as for variable area/variable depth and variable area (direct transfer) gravure printing processes. For all of these reasons, a color proofing system that utilized state of the art, high resolution electrophotographic equipment to provide acceptable off-press proofs of gravure printed images would provide decided advantages to the graphic arts and printing industries.

Disclosure of Invention

The present invention provides a color proofing system that can effectively produce off-press proofs for gravure printed images using a high resolution electrophotographic printer. Instead of optimizing the high resolution electrophotographic printer so as to more accurately control the contrast and sharpness of the of the halftone dots as has been done in the prior art, the present invention optimizes the deposition profile of a clustered dot cell of electrophotographically developed ink dots so as to more closely simulate the deposition profile of ink deposited in conventional and direct transfer (halftone) gravure printing processes. For state of the art high resolution, liquid ink electrophotographic printers that were originally designed for high contrast, discrete halftone dots, such as described in U.S. Patent No. 4,782,983, the color proofing system of the present invention selectively modifies three distinct operating parameters so as to effectively generate low contrast, overlapping contone dots having relatively high inter-cell deposition when printing clustered dot cells. As a result of the use of overlapping contone dots having significant inter-cell deposition, the tonal rendition of the finished proof more accurately simulates gravure printing than any previously known gravure proofing process.

The digital electrophotographic process for generating color proofs of gravure printed images in accordance with the present invention includes the steps of charging the surface of a photoconductor, scanning an addressable writing beam modulated with image signals across the photoconductor to expose the photoconductor surface at a plurality of addressable spots to at least partially discharge the addressed spots to form a latent photoelectric image, and developing the latent image by depositing charged toner particles on the scanned photoconductor surface. The three operating parameters that are selectively modified during this process to produce the overlapping contone dots having significant inter-cell deposition are: (1) the spot image overlap of the laser beam profile; (2) the charge differentiation between the non-charged and charged areas on the photoconductor; and (3) the charge density associated with the toner particles deposited on the photoconductor surface. The laser beam profile is maintained at a spot image width in relation to the distance between adjacent addressable spots such that adjacent spot images overlap, preferably with a beam radius to overlap ration of 2.0 to 4.0. The charge differentiation between the background or non-charged areas with respect to the charged areas on the photoconductor surface is maintained at a low ratio, preferably less than 25%. Finally, the charge density associated with the toner particles deposited on the photoconductor surface is developed substantially to saturation, preferably greater than 90% of the photoconductor surface charge capacity.

Unlike dot cells for standard halftone dots that vary only in area, the gravure clustered dot cells produced by the present invention allow can vary in both cell area and ink thickness. In addition, the edge profile of a gravure dot cells of the present invention is gradual, not sharp. This allows for significant inter-cell deposition, thereby allowing for overlapping of adjacent gravure dot cells. The variation in ink thickness, graduated edge profile, and overlapping of adjacent gravure dot cells allows the ink deposited on top of a paper substrate by an electrophotographic process to more closely simulate the color and tone reproduction of ink that is absorbed into the paper in a gravure press printing.

## Brief Description of the Drawings

Fig. 1 is a schematic depiction of an electrophotographic apparatus suitable for use with the present invention.

Figs. 2a and 2b are diagrammatic representations of the spot image of an electrophotographic apparatus in accordance with the prior art (Fig. 2a) and in accordance with the present invention.

Fig. 3 is a diagrammatic representation of the relationship between the background voltage and development voltage.

Figs. 4a, 4b and 4c are cross-sectional representations of a pair of adjacent gravure dot cells at various tonal intensities produced in accordance with the present invention.

Figs. 5a, 5b and 5c are cross-sectional representations similar to Figs. 4a, 4b and 4c of a pair of adjacent halftone dot cells at various tonal intensities produced in accordance with the prior art.

## Detailed Description

Multicolor electrophotographic processes are herein disclosed in which the prints produced by the process simulate the process of gravure printing. An apparatus, and basic process within which the present invention can be used is disclosed in U. S. Patent No. 4,728,983. One embodiment of the apparatus and process of the '983 patent is as follows.

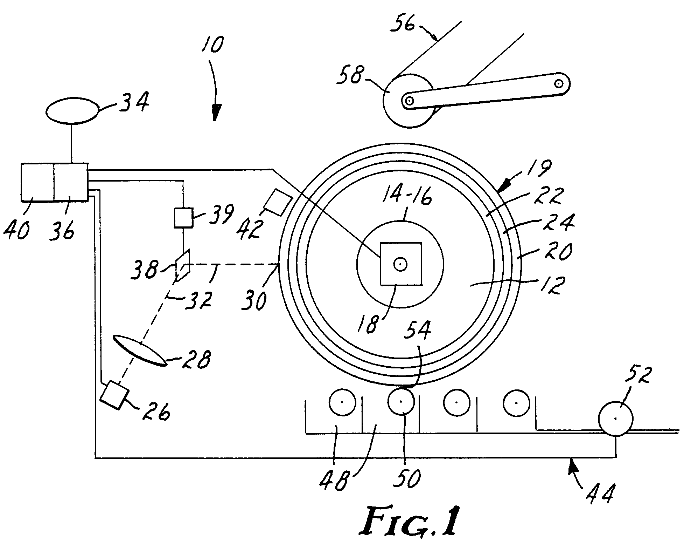

Referring to Fig. 1, a device 10 for producing electrophotographic images includes a metal drum 12 of, for instance, diameter 20 cm and length 36 cm that is rotated on journals supported on a substantial frame (not shown). The drum 12 is driven by a DC servo motor 14 with encoder and tachometer 16 that is controlled in speed, for example, to 0.42 revolutions per minute by speed controller 18. A photoreceptor 19 is wrapped around the drum 12. The photoreceptor 19 includes a layer of photoconductor material 20 coated on a plastic substrate 22, with the substrate 22 having an electrically conductive surface layer 24. A suitable photoconductor comprises bis-5,5' -(N-ethylbenzo(a)carbazolyl)-phenylmethane (BBCPM) in a Vitel PE 207 polyester binder, sensitized with an indolenine dye having a peak absorption in solution at a wavelength of 787 nanometers.

Infra red light of, for instance, power 2 milliwatts and wavelength 780 nanometers emitted by self-modulated laser diode 26 is focused by lens system 28 onto the photoconductor surface as indicated at 30 as a spot with a 1/2 imax diameter (the diameter of the beam measured at the distance from the diode 26 where the power of the beam is 1/2 the beam power measured at the diode 26). As is described more fully below, the size of the focused beam width is adjusted in proportion to the spacing of addressable spots on the photo conductive surface to attain a significant overlapping of the addressable spots. The focused beam 32 is modulated by signals supplied from memory unit 34 by control unit 36 to laser diode 26. The beam 32 is directed to a rotating two-surface mirror 38 driven by motor 14. The mirror speed of 5,600 revolutions per minute and the synchronization of its scans with the image signals to the laser diode 26 are controlled accurately by the control unit 36. A sensor 40 coupled to the control unit 32 signals for start of cycle of rotation of the drum 12 which in turn actuates the laser diode 26 for the transmission of picture frame information.

A scorotron 42 charges the surface of the photoconductor 20 to a voltage of about +700 volts immediately before the exposure point 30. A toning developer unit 44 contains four identical developer units 48 containing respectively black, cyan, magenta, and yellow liquid toner. In each developer unit 48 there are means to supply the toner to the surface of a roller 50 which is driven at the same surface speed as the drum 12. A developer unit motor drive 52 enables any desired toner station to be selected to engage the roller 50 with the surface of the photoconductor 20 along a line as indicated at 54 so that toner is applied to the surface. A bias voltage of +350 volts is applied between an electrode surface of the roller 50 and the electrically conducting layer 24 of the photoconductor 20.

The impingement of the beam 32 on the charged photoconductor 20 alters the charge of the photoconductor 20, providing a latent image in accordance with the sweep of the beam 32 across the photoconductor 20, and the modulation of the beam 32. The charge differentiation between the imaged and non-imaged portions of the surface of the photoconductor 20 forms the latent image. As is described in more detail below, the combination of the voltage on the photoconductor 20 and the bias voltage between the photoconductor 20 and the roller 50 are established so as to maintain a minimum charge differentiation between charged and non-charged areas on the photoconductor 20. The liquid toners at the developer unit are electrically charged, as described in detail below, and are attracted in different amounts to different areas of the surface of the photoconductor at the developer unit 44 in accordance with the charge differentiation defining the latent image.

A complete exposure and toning cycle is repeated for each of the required color separation images. For instance, four color images can be laid down in register in the order black, cyan, magenta, and yellow. The resulting combined color image is then transferred to a receptor paper 56 and made permanent by actuating the drive roller 58 heated to 1,200 degrees Centigrade and engaging the receptor surface with the photoconductor surface at a pressure of 1.79 kilograms/centimeter. The resulting permanent, full color picture has a highly accurate registration between the separation images and a high level of color fidelity. The remaining toner on the photoreceptor can be cleared away, and the photoreceptor readied for exposure to a second image.

In more detail, the inner layer or substrate 22 of photoreceptor 19 is preferably flexible. The conductive surface layer 24 is coated on the substrate 22 by methods known in the art (U.S. Pat. No. 4,617,245) so that it does not reflect the laser light to cause interference and defects in the image. Preferably the photoconductive material 20 is an organic type. Particularly suitable are those described in U.S. Patent Nos. 4,361,637; 4,337,305; 4,356,244; 4,357,405 and 4,367,274 which are compounds of the general type bis-(N-alkyl-benzocarbazolyl)-aryl-methane. Sensitization of the photoreceptor photoconductive material 20 preferably should be to a single narrow band of electromagnetic radiation which should also match the laser light wavelength used for scanning exposure. A coating thickness for the photoconductor of from about 5 to 30 microns is preferable to obtain a surface voltage level of from +300 to +1000 volts. The rate of surface charge decay in unexposed areas must be such that the voltage does not decay below the development bias voltage when the image area enters the development station. The photoreceptor may optionally be coated with release layers such as shown in U.S. Pat. No. 4,600,673. The photoconductive layer 20 maintains a ground contact to the electrically conductive layer 24.

The scorotron 42 is a corona charging device and is positioned proximal the photoreceptor surface at the start of the image cycle. The corona high voltage wires (not shown) are coupled to a suitable positive high voltage source (not shown) of +4,000 to +7,000 volts. The grid wires are disposed about 1-3 millimeters from the photoreceptor surface and are coupled to an adjustable positive voltage supply to obtain an apparent surface voltage on the unexposed photoreceptor 20 in the range +300 to +1,000 volts.

The imaging beam may be a single beam or an array of beams at about the same emitting wavelength which is used in scanning as a single pencil; the individual beams in such an array may be individually modulated. The beam impinges, for example, on the photoreceptor as a line scan generally perpendicular to the direction of movement of the movement member and at a fixed position relative to the scorotron. This position remains constant throughout the exposure of all color separations of a full color image.

The image scanning means includes a suitable source of high intensity electromagnetic radiation exemplified herein by a laser. The laser wavelength is selected to be transmitted through all the colorants used with low absorption (although it is not essential to be transmitted through the last to be applied color) in the developing steps including the black. Additionally the laser wavelength selected should preferably correspond to the maximum sensitivity wavelength of the photoreceptor. Preferred sources are infrared diode lasers with emission wavelengths over 700 nanometers, and less preferred are UV lasers with emission wavelengths below 400 nanometers. Specially selected wavelengths in the visible spectra may also be usable with some combinations of colorants.

The color developing process in the preferred embodiment makes use of liquid toner immersion development techniques. Two modes of development are known in the art - deposition of toner in exposed areas of the photoconductor and alternatively in unexposed regions. In the preferred embodiment of the invention, a discharge development system is used whereby positively charged toner is deposited in areas discharged by the laser beam. This mode of imaging can improve formation of halftone dots while maintaining uniform density and low background densities. This development may be accomplished by using a uniform electric field produced by the development electrode roller 50 spaced near the photoreceptor surface 24. As indicated above, a bias voltage is applied to the electrode roller 50 intermediate to the initially charged surface voltage and the exposed surface voltage level to maintain a minimum charge differentiation between charged and non-charged areas.

Liquid toner is caused to flow between the electrode and the photoreceptor at developer unit 44. The charged toner particles are mobile in the field and are attracted to the discharged areas on the photoreceptor while being repelled from the undischarged non-image areas. As described more fully below, the charge density associated with the toner particles in the liquid toner is developed substantially to saturation. Excess liquid toner remaining on the photoreceptor surface is removed by vacuum techniques well known in the art. Thereafter the photoreceptor surface 24 may be forced dried or allowed to dry at the ambient conditions.

It will be understood that the developing materials are selected to allow the photoreceptor to be charged and discharged for a subsequent image even when some areas have one or more colorants of a previous separation deposited thereon. This allows green, for example, to be produced from cyan and yellow and a three color black to be produced from cyan, magenta, and yellow. It is further understood that this will also include the black colorant so that the photoreceptor may be discharged in areas already containing black separation information.

The order of imaging and developing for the individual color separations of the full color image is not fixed, but may be chosen to suit the process in hand and depends only on the final image requirements. In color proofing the color overlay order should reproduce the applicable printing process. This may require black, for example, to be imaged first, last or intermediate to the other colors. A single transfer step reverses the color order on the final substrate requiring the original imaging order to be reversed. A double transfer procedure with an intermediate carrier would create a final image with the colors laid down in the same order as on the photoreceptor.

As described briefly above, the four color image assembled on the photoreceptor 19 is transferred in a single step to a suitable copy substrate material or carrier sheet for subsequent transfer to a final receptor sheet 56. The top of the developed image is synchronized with the top of the copy substrate material to correctly position the image on the substrate, and the photoreceptor is moved forward while the copy substrate is contracted and subsequently removed to transfer the entire full color image. Particularly desirable materials and process for accomplishing this are described in U.S. Patent No. 5,108,865. The developed image may be subsequently fixed as by a fuser if necessary. Any residual charge and/or developing material left on the photoreceptor may be removed if necessary by a cleaning station and erase lamp, such procedures being well known in the art.

With the above description of the method and apparatus for the preferred embodiment of the multicolor electrophotographic process in mind, the detailed description of the preferred embodiment of the present invention will now be presented. Three operating parameters of a conventional multicolor electrophotographic process are uniquely modified by the present invention in order to effectively reproduce the desired overlapping contone gravure clustered dot cells having significant inter-cell deposition that can simulate gravure proof images. The three operating parameters are: (1) the spot image overlap of the laser beam profile; (2) the charge differentiation between the charged and non-charged areas on the photoconductor; and (3) the charge density associated with the toner particles deposited on the photoconductor surface. The modifications of each of these parameters will be discussed below.

There are a few references which disclose a general awareness of the importance of some of the various process parameters involved in halftone dot contrast as they relate to color reproduction, as described, for example, in Zwadlo, G., "The Effect of Halftone Dot Contrast on Critical Color Reproduction", *IST Proceedings of the 6th Int'l Conf. on Non-Impact Printing,* Oct. 1990, and Sonnenberg, H., "Laser-scanning Parameters and Latitudes in Laser Xerography", *Applied Optics,* Vol. 21, No. 10, (May 15, 1982), pp. 1745-1751. Although a general awareness of the importance of certain electrophotographic process parameters on color reproduction has been known for some time, as indicated in the description of the background art, the objective in modifying and controlling these process parameters has been to create sharper dot images. In the event that edge contrast is not sharp enough, the article by Zwadlo suggests correlating the halftone dot edge contrast of a particular electrophotographic process to the inherent proportionality failure in color reproduction as a basis for selecting and/or calibrating that process in order to emulate a lithographic print process. Nowhere in these references is there any suggestion of using any of the process parameters to intentionally generate inter-cell deposition between clustered dot cells for the specific purpose of reproducing contone dot cells that can effectively simulate a gravure proof image.

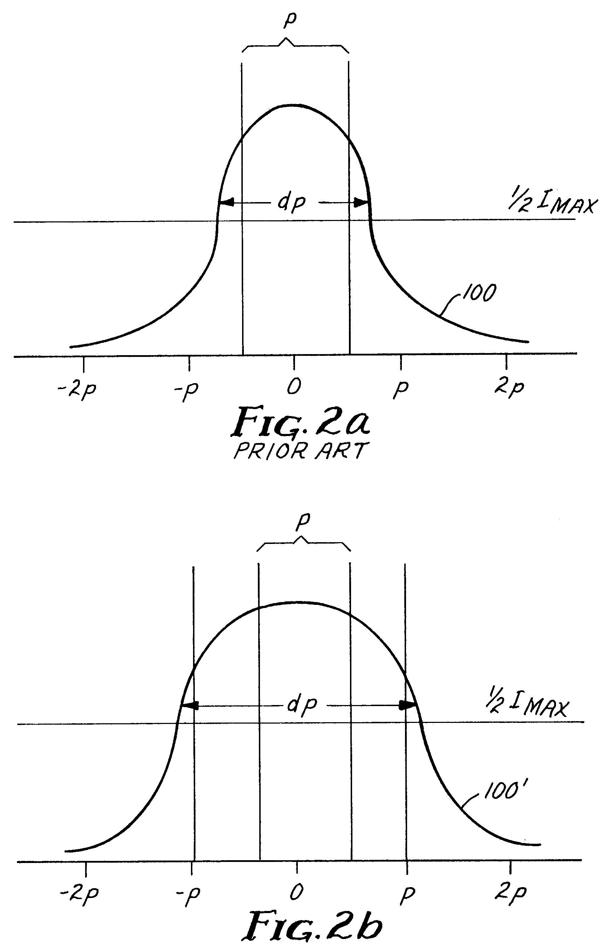

Referring now to Figs. 2a and 2b, the first of the modified process parameters will be described. In the prior art, as shown in Fig. 2a, the spot image 100 is focused such that the 1/2 Imax diameter closely corresponds to the pitch p of the addressable dots. For example, in Fig. 2a, the pitch p is approximately 13 microns and the 1/2 Imax diameter is approximately 13-16 microns for the electrophotographic apparatus as described in the '983 patent. In this situation, the distribution $\alpha p$ or overlap ratio of the spot image 100 to the pitch p varies between 1.2 and 1.5 (i.e., 13/16 - 13/19). As indicated in the article by Sonnenberg, the power distribution $\alpha p$ of a spot image 100 for optimum reproduction of halftone dots should vary in the small range of $1.5 < \alpha p < 2.0$. In contrast, the distribution $\alpha p$ or overlap ratio of the spot image 100' of the present invention to the pitch p, as shown in Fig. 2b, varies between 2.0 and 4.0. By forcing the spot image 100' to have a distribution $\alpha p$ or overlap ratio outside the optimum range of reproduction of halftone dots, the present invention intentionally generates clustered dot cells that have inter-cell deposition.

It will be understood that the focused beam is modulated in intensity as it is continuously scanned across the drum 12 as shown in Fig. 1. In accordance with the invention, the laser beam 32 is shaped, modulated, and addressed such that adjacent imaged dots significantly overlap each other. In particular, the ratio of the radius of the dots to the length of overlap between adjacent dots measured along aligned radii of adjacent dots is within the range of 2.0 to 4.0. As such, the laser beam for the preferred embodiment having a pitch p of 13 microns is focused to a spot with 1/2 Imax diameter of nominally about 30 microns. Modulation of the beam in intensity as it is swept accordingly images succeeding lines of adjacent dots on the photoreceptor surface of the drum 12. Because the beam is continuously swept, each dot will include a "tail" reflecting the less than instantaneous shift between modulated states of the beam.

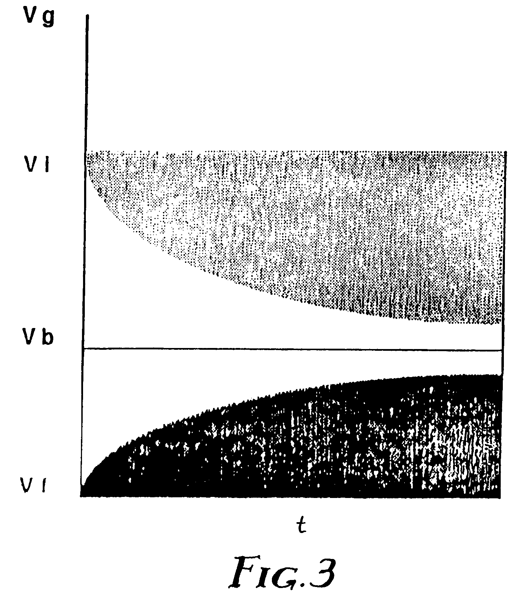

Referring now to Fig. 3, the second of the modified process parameters will be described. One of the important process control aspects of the present invention is the discovery that a significant amount of between dot deposition occurs when charge differentiation between image and background area decreases. This results in a similar effect to fill in for gravure printing between closely grouped dots in a clustered dot cell. Large background portions of the image, however, remain clear.

More particularly, the bias voltage $V_b$ of the development electrode 51 can be taken as an indicator of the charge level of the inked area. Acceptable between cell deposition to simulate the gravure printing process can be effected when the ratio of the charge level between background or non-inked areas to the charge level of inked areas on the photoreceptor surface is:

$$\text{charge ratio} = \frac{(V_i - V_b)}{(V_i - V_f)} \leqq 25\%$$

where:
$V_g$ is the initial grid voltage of the system;
$V_i$ is the charge level of the unexposed area;
$V_f$ is the charge level of the charged area; and
$V_b$ is the bias voltage on the development electrode (indicating the charge level of the inked areas).

Unlike charge differentiation ratios in electrophotographic processes, such as that shown in U.S. Patent No.4,708,459, the charge differentiation ratio of the present invention is specifically selected to encourage the overlapping development of toner in non-imaged or unexposed areas. In the '459 patent, for example, the charge differentiation ratio is defined by $\Delta V'/(\Delta V+\Delta V')$, where $\Delta V' = V_i - V_b$ and $\Delta V = V_i - V_f$. For the preferred values set forth in the '459 patent, $\Delta V'$ is kept constant at 100 volts and $\Delta V$ is 125 volts, thus yielding a charge differentiation ratio of 100/225 or 44%. In fact, the charge diffferentiation ratio is specifically kept from becoming too small so as to prevent the development of undesired toning in non-image areas. In contrast, the charge differentiation ratio of the present invention of less than or equal to 25% specifically encourages the overlapping of spot image areas.

The final of the modified process parameters that are a condition of the present invention involves the charge density of the toner particles. In addition to maintaining the charge ratio as described above, the charge density associated with the ink deposits on the photoreceptor be maintained substantially at saturation. Preferably, the charge saturation of the toner is maintained at a level greater than or equal to 90% of the photoreceptor surface charge capacity, where:

$$\text{surface charge capacity} = V_b - V_f.$$

It will be understood that the bias voltage applied to the electrode, $V_b$, is intermediate the initially charged surface voltage $V_i$ and the exposed surface voltage $V_f$ to meet the above conditions.

One type of toner found particularly suitable for use herein consists of toner materials that are transparent and of low absorptivity to the laser beam being used for imaging. This allows the laser light to pass through the previously deposited toner or toners and impinge on the photoreceptor surface and reduce the deposited charge. This type of toner permits subsequent imaging to be effected through previously developed toner images as when forming a second, third, or fourth color separation image without consideration for the order of color deposition. This is particularly important in generating a digital proof where the overlaid colors must accurately match the printing process. The percent trapping (ratio of (a) the amount of colorant printed over another color to (b) the amount of that colorant printed directly to paper) must meet gravure requirements (typically over 85%). This must include black as when, for example, a cyan must be printed over black to give a deeper perceived color. The percent overprinting must be maintained throughout the dot tone reproduction scale. It is preferable that the toners transmit at least 80% and more preferably 90% of the laser light that is transmitted and that the light is not significantly scattered by the colorant deposit.

Other requirements of the toner are that after deposition the toners allow the photoreceptor to be scorotron charged to the same level as untoned areas on the photoreceptor, and that the toners do not affect the dark decay characteristics. Furthermore, it is important that the toners do not reduce the sensitivity of the photoreceptor to the light of the laser beam. It is also important for the toners to maintain the latent image resolution, not allowing charge dissipation to occur on the photoreceptor surface, to allow subsequent toner deposition in the development station without loss in resolution, and to resist washing off from the photoreceptor during the development and any wash steps. There should be no dependence on order of deposition for any of the above recited properties.

The importance of the physical parameters of the liquid toners used to develop electrophotographically produced latent images has been discussed in the references related to liquid toners. Toner parameters important to the developing process include toner conductivity, zeta potential of toner particles (the potential gradient across the region between the rigid layer attached to the toner particle and the bulk of the solution) charge per particle or per unit mass of particles, and the localization of the charge on the particles. Liquid toners suitable for the practice of this invention are disclosed in U. S. Patents Nos. 4,946,753 and 5,061,583.

The liquid toners according to U.S. patent No. 4,946,753 comprise a carrier liquid having a resistivity of at least $10^{13}$ ohm-centimeters and a dielectric constant less than 3.5. Colored or black toner particles are dispersed in the carrier liquid that contain at least one resin or polymer conferring amphiphatic properties with respect to the carrier liquid, and optionally at least one moiety acting as a charge directing agent.

U.S. Patent No. 5,061,583 discloses that liquid toners for development of half-tone images of the highest quality, and which may now be used in accordance with the method of the present invention in producing proofs of gravure images, may be uniquely characterized by two parameters:

(a) more than 70% of the conductivity is contributed by the charged toner particles as opposed to the background conductivity contributed by ionic species in solution in the carrier liquid, at a toner solids concentration in the range 0.1 to 1.0 weight %, preferably in the range 0.1 to 0.5 weight % and most preferably in the range 0.2 to 0.4 weight %,

(b) the zeta potential of the particles is within a range from 60 mV to 200 mV. For reverse development, the sign of the zeta potential should be the same as the sign of the charge on the photoconductor. For multicolor toner overlay images the sign should be positive, but for monochrome images the sign may optionally be negative.

The '753 patent further discloses that for multicolor images, the efficiency of overlay of such liquid toner developers is enhanced by the satisfaction of a third parameter requirement, namely

(c) toner particle compositions such that where deposited during development of electrostatic latent image, they film-form at ambient temperature immediately after removal of the carrier liquid. To this end the resins or polymers used in the toner particles should have $T_g$ values (the glass transition temperature) below 25°C. and preferably below -10°C.

It is helpful in understanding the description of liquid toners suitable for use in the present invention to be clear on the meaning of certain terms used in the description of the toners. "Conductivity" as used herein is volume conductivity and may be measured by standard electrical bridge techniques (e.g., C. F. Pruton and S. H. Maron, *Fundamental Principles of Physical Chemistry,* Revised Edition, 1951. The MacMillan Company, N.Y., pp. 448-455). The volume conductivity is given by the measured current divided by the area of the plate electrode and by the field E. The volume conductivity has units of mhos/cm.

Specific Solids Conductivity, $C_8$, is often referred to as equivalent solids conductivity. This is the ratio of the volume conductivity to the weight percent ($W_p$) of total solids in the liquid developer. $W_p$ may be obtained directly by evaporating the liquid carrier from a measured weight of liquid toner and weighing the solids residue.

The ratio of conductivities is defined as $C_b/C_l$ where $C_b$ is defined as the conductivity of the carrier liquid as it appears in the toner and $C_l$ is defined as the conductivity of the liquid toner as a whole. Measurement of $C_b$ and $C_l$ should be taken within a time equal to or less than about 5% of the time constant for the measurement conditions chosen (as disclosed herein). The ratio of conductivities is a measure of the importance of the spurious conductivity associated with the charged toner particles and therefore not contributing to the deposition of toner.

As set forth above, in order to maintain the charge saturation substantially at saturation the charge saturation of the toner is maintained at a level greater than or equal to 90% of the photoreceptor surface charge capacity. The performance properties of toners suitable for use with the invention will now be related to the physical and chemical properties of the liquid toners which are disclosed as satisfying these requirements.

a) The ratio between the conductivity of the carrier liquid as it appears in the liquid toner and the conductivity of the liquid toner as a whole should be less than 0.3; and

b) The toner inks will have values of Q/O.D.-centimeters$^2$ in excess of 0.125 where Q is the quantity of charge, and O.D.-centimeters$^2$ is a given optical density per square centimeter of area coverage.

With respect to property (a), the conductivity of a liquid toner has been well established in the art as a measure of the effectiveness of a toner in developing electrophotographic images. A range of values from $1.0 \times 10^{-11}$ mho/cemtimeters to $10.0 \times 10^{-11}$ mho/centimeters has been disclosed as advantageous in U.S. Patent No. 3,890,240. High conductivities generally indicated inefficient deposition of the charges on the toner particles and were seen in the low relationship between current density and toner deposited during development. Low conductivities indicated little or no charging of the toner particles and led to very low development rates. The use of charge director compounds to ensure sufficient charge associated with each particle is a common practice. There has in recent times been a realization that even with the use of charge directors there can be much unwanted charge situated on charge species in solution in the carrier liquid. Such unwanted charge produces inefficiency, instability and inconsistency in the development. Suitable efforts to localize the charges onto the toner particles and to ensure that there is substantially no migration of charge from those particles into the liquid, give substantial improvements.

As a measure of the required properties, the present description uses the ratio between the conductivity of the carrier liquid as it appears in the liquid toner and the conductivity of the liquid toner as a whole. This ratio should be less than 0.3. Prior art toners that have been examined have shown ratios much larger than this, in the region of 0.95.

With respect to property (b), the charge carried by each of the toner particles is known in the art to be important in stabilizing the dispersion of the particles in the carrier liquid especially upon long term storage. It has also been found that it is also a prime factor in ensuring the adhesion of the freshly deposited toner particles to the receiving surface whether this is the photoconductor or a previously deposited toner layer. It is believed that the adhesion is connected with the velocity with which the particle impinges on the imaging under the influence of the electric bias field produced by the development electrode in the reverse development procedure. The effectiveness of the charge in increasing mobility (and therefore the velocity under the influence of the electric bias field) of the toner particles in the environment of the carrier liquid is measured by zeta potential of the particle.

By definition the zeta potential is the potential gradient across the diffuse double layer, which is the region between the rigid layer attached to the toner particle and the bulk of the solution (ref. *Physical Chemistry of Surfaces,* by Arthur Adamson, 4th. Edition, pages 198-200). The zeta potential was evaluated here from a measurement of toner particles mobility using a parallel plate capacitor arrangement. The capacitor plate area was large compared with the distance between the plate so as to obtain a uniform electric field $E = V/a$ where V was the applied voltage and d the plate separation. The liquid toner filled the space between the plates and the current resulting from the voltage V was monitored with a Keithley 6/6 Digital Electrometer as a function of time. Typically the current was found to show an exponential decay due to the sweeping out of charged ions and charged toner particles. The legitimate assumption was made that the time constant for the toner particles was much longer than that for the ionic species and therefore the two values cold be separated in the decay curves. If t is the time constant then the velocity (u) of the charged toner particles under influence of the field E is $u = d/t$ and the toner mobility (m) is $m = u/E$.

The zeta potential (z) is then given by $z = 3sm/2ee_o)$ where s is the viscosity of the liquid, $e_o$ is the electric permitivity, and e is the dielectric constant of the carrier liquid. References in the literature to zeta potential of the toner particles (U.S. Pat. No. 4,565,574 and Muller et al above) are limited to the stabilizing effect of the zeta potential on the dispersion of the toner particles in the liquid. The values given in the '938 patent, 26 millivolts to 33 millivolts, are too small for the purposes of the present invention.

Although the zeta values in Muller et al are higher, and within the range of those recited in the practice of the present inventions, they are combined with conductivity values much lower than are required. It has also been found that the zeta potential should be relatively uniform in a given toner and be centered within the range of +60 millivolts to +200 millivolts.

The described toners can be imaged in succession onto an organic receptor layer comprising BBCPM {bis-5,5'-(N-ethylbenzo(a)carbazolyl)-phenyl-methane} sensitized with an indolenine dye having a peak absorption in solution at a wavelength of 820 nanometers, charged to +520 volts and discharged with a laser scanner emitting light of wavelength 833 nanometers to a potential of +60 volts at 1,500 scan lines per inch (590 scan lines per centimeter). Reverse development mode with a gap of 15/100 inch (0.38 millimeters) between the electrode and the photoconductor is used, the bias potential of the electrode being +350 volts, within Dwell time between the development electrodes of 1.5 seconds. The assembled developed images are transferred to a coated paper receptor sheet.

Conductivity is a function of the solids concentration of the liquid toner. A parameter obtained by dividing the conductivity by the solids concentration in weight % is a better indicator of the acceptability of the liquid toner than the conductivity alone. This parameter is the equivalent solids conductivity, $C_s$. In the case of non-gravure proofing applications, sharp, high-contrast halftone dots can be derived from the use of liquid toners with low solids concentration and with a low conductivity ratio as presented in parameters (a) above. This is especially true when the ratio of mobility to equivalent solids conductivity is high. The initial equivalent solids conductivity should be less than $10^{-10}$ mho/centimeters.

In contrast, gravure proofing applications call for halftone dots having less contrast that can produce gravure-like overlapping clustered dot cells. While the "conductivity ratio" as described above holds good for the overprinting desired in gravure applications, the percent solids and the equivalent solids conductivity should be higher in order to obtain ink deposit charge densities of greater than 90% of the photoreceptor surface charge capacity. It will be understood that to obtain this desired high amount of charge deposition on the photoreceptor surface requires either a longer development time, or higher percent solids in the working strength of the ink (in this case the equivalent solids conductivity does not change).

An ink having sufficient charge to obtain the required 90% completion development will typically have a high charge associated with a given optical density per square centimeter of area coverage. In particular, inks suitable for use in the present invention will have values of Q/O.D.-centimeters$^2$ in excess of 0.125 where Q is the quantity of charge, and O.D.-centimeters$^2$ is a given optical density per square centimeter of area coverage.

The development conditions must be matched to these liquid toner properties so as to ensure high deposition rates without depletion of toner concentration in the development gap. This is especially true when the ratio of mobility to equivalent solids conductivity is high. Thus a gap in the range 250 microns to 500 microns with a bias voltage to give a field in the range 5,000 volts/centimeter to 25,000 volts/centimeter are found to be particularly suitable with the toner parameters given in (a) above. Dwell times in the range 1 second to 3 seconds are effective with a high flow of liquid toner through the gap.

Referring now to Figs. 4a-4c, the properties and characteristics of the gravure clustered dot cells produced by the present invention will now be described. In standard halftone dots, there are only two critical parameters relating to color reproduction: cell thickness and cell area. To more precisely control the halftone color reproduction process, cell thickness is kept constant for a given reflection density so that tone reproduction occurs only as a function of cell area. Edge contrast is very sharp so that no variation in ink thickness occurs within any dot in the cell. In contrast, the gravure halftone clustered dot cells 200 of the present invention are allowed to vary in both cell area and ink thickness. In addition, the edge profile of a gravure dot cells 200 is gradual, not sharp. This allows for significant inter-cell deposition, thereby allowing for overlapping of adjacent gravure dot cells 200 and 200'.

For purposes of illustration, the pairs of gravure dot cells 200 in Figs. 4a-4c are shown as having a slightly larger percentage of tonal intensity than the adjacent gravure dot cell 200'. For example, Fig. 4a shows a pair of adjacent quatertone gravure dot images of approximately 25% intensity and 20%, respectively. In this embodiment, the gravure dot cells 200 are dithered in accordance with standard halftone clustered dot cell dithering techniques, e.g., starting at the center of the cell and spiraling outward. It will be recognized, however, that alternative dithering techniques could also be used with the present invention. Of particular interest in producing shadows and halftones would be to alternate or skip dot positions within a 16x16 dot gravure dot cell as the cell is being dithered so as to take further advantage of the overlapping of adjacent dots and produce a thinner ink deposit distributed over more of the surface area of the gravure dot cell 200.

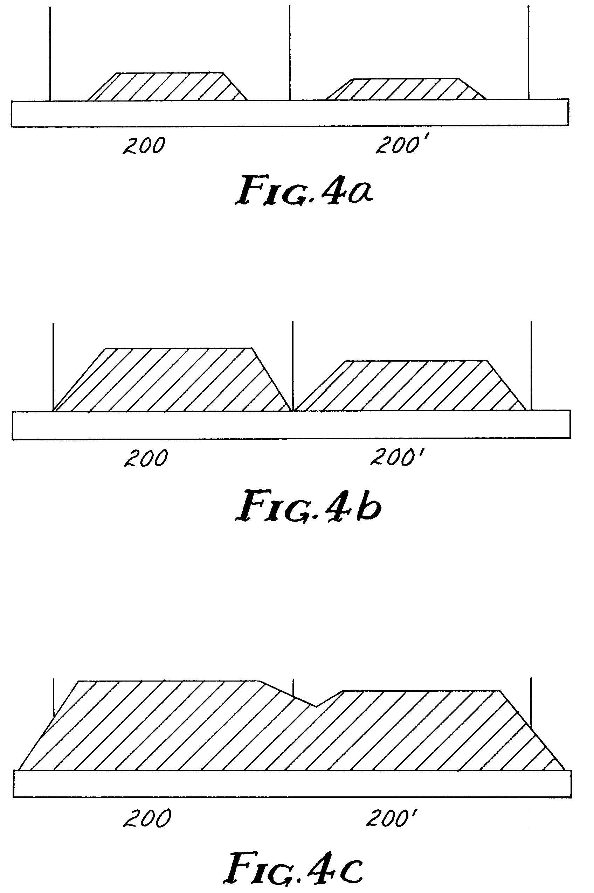

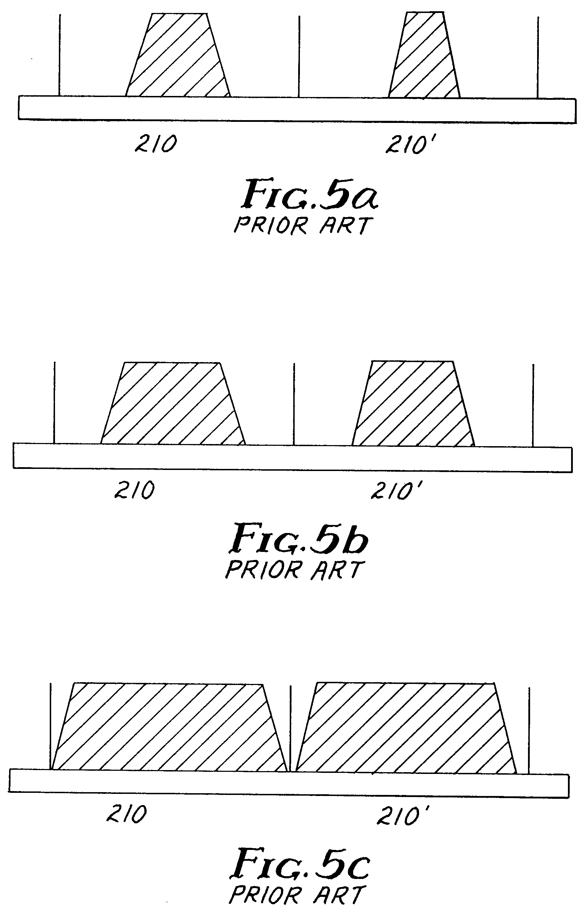

For highlights and quartertones as shown in Fig. 4a (tonal intensity $T_i$, 2%<$T_i$<35%) the edge profile of the cell 200 is less critical as the ink thickness of the cell 200 will overall be significantly thinner than the ink thickness required for solids. For midtones (35%<$T_i$<70%), as shown in Fig. 4b, the edge profile of the cell 200 contributes more significantly to tone reproduction as the centers of the adjacent cells 200 and 200' begin to approach full ink thickness. Finally, for shadow areas as shown in Fig. 4c, (70%<$T_i$<98%) the ink covers the full area between the adjacent cells 200 and 200', but the ink thickness is less than the maximum ink thickness. Figs.5a-5c show the corresponding conventional halftone clustered dot cells 210 which would be produced for similar tonal intensities. It will be seen that the gravure cells 200 of the present invention vary in ink thickness, whereas the corresponding conventional halftone clustered dot cells 210 do not vary in ink thickness. The differing results are shown, for example, by noting that the shadow area cell produced by the present invention have ink covering the entire area of both cells 200, but with thinner areas. The shadow area cell of a conventional halftone clustered dot cell 210 still has open space that shows up as holes in the standard halftone pattern that reflect the paper, rather than an ink.

In the preferred embodiment, the gravure clustered dot cells 200 have ink thicknesses which vary between 20% up to 100% of the maximum ink thickness for tonal intensity values between 2% thru 70%. At the same time, the gravure clustered dot cells 200 have graduated edge profiles such that some thickness of ink begins to cover the entire paper area between adjacent cells 200 for tonal intensity values of greater than 50%. An alternative way to describe the characteristics of gravure clustered dot cells 200 produced in accordance with the present invention by color measurement. It has been found that for equal solid area color value, the gravure dot cells 200 must replicate tint color to within 6 $\Delta E$ value for cyan, magenta and yellow of the equivalent gravure press printed cell. The $\Delta E$ value is a known measure of color difference in the Hunter CIEL*a*b* color space.

The combination of adjusting the described three parameters to the electrophotographic process as described provides for significant between cell ink deposition of clustered dot cells in a process that heretofore has been noted for its sharp dot contrast. Adjusting the laser diameter is perhaps the simplest way to attain the required overlap between adjacent dot cells. The requirement of high charge density is attained as described through control of ink charge, ink concentration, dwell time and $V_b$-$V_f$. The required charge differentiation between the background or non-inked areas with respect to the ink areas is attained through control of $V_i$, $V_b$ and $V_f$. The variation in ink thickness, graduated edge profile, and overlapping of adjacent gravure dot cells allows the ink deposited on top of a paper substrate by an electrophotographic process to more closely simulate the color and tone reproduction of ink that is absorbed into the paper in a gravure press printing. The overall effect is to provide an electrophotographic proof that closely simulates the color gamut and tonal reproduction of gravure printing.

## Claims

1.  A digital electrophotographic process for generating a proof of a gravure printed image by developing a latent photoelectric image with charged toner particles, having the steps of: generally uniformly charging a photoconductor surface; scanning an addressable writing beam modulated in accordance with image signals representative of said gravure printed image across said charged photoconductor surface to expose said photoconductor surface at a plurality of spaced apart addressable spots such that said photoconductor surface is at least partially discharged at selected ones of said addressable spots to form said latent photoelectric image by a resultant charge differentiation between charged addressable spots and non-charged addressable spots; and focusing a spot image generated by said addressable writing beam such that said spot image of said addressable writing beam at least partially overlaps adjacent ones of said addressable spots during the scanning of said photoconductor surface; characterized by maintaining a minimal charge differentiation between said charged addressable spots and said non-charged addressable spots of said photoconductor surface; and developing said latent image substantially to saturation by depositing said charged toner particles on said scanned photoconductor surface to provide a developed photoelectric image to be transferred to a medium to create said proof, whereby the focusing of said spot image, the maintaining of said minimal charge differentiation, and the developing of said latent image substantially to saturation all provide for a color gamut and tone reproduciton such that said proof presents an effective simulation of said gravure printed image.

2.  A method for producing an off-press color proof representative of a gravure printed image by using a high resolution electrophotographic printer wherein a plurality of color separation toner images comprised of a plurality of selectively discharged addressable dots are assembled on a charged photoreceptor as gravure clustered dot cells using successive toning steps wherein a charged toner is selectively deposited on said charged photoreceptor, characterized by the step of: optimizing a deposition profile of charged toner attracted to said selectively discharged addressable dots so as to simulate a deposition profile of ink deposited in a gravure printing process whereby a tonal rendition of said gravure dot cells of said off-press color proof effectively simulates said gravure printed image.

3.  The improved method of claim 2 wherein the step of optimizing said deposition profile comprises the steps of:
    maintaining a charge differentiation between said selectively discharged addressable dots and addressable dots that are not selectively discharged at a relatively low ratio;
    maintaining a spot image that selectively discharges said addressable dots such that spot images of adjacent addressable dots at least partially overlap; and
    developing a charge density associated with said charged toner substantially to saturation.

4.  The method of claim 3 wherein the ratio of the step of maintaining a charge differentiation is preferably less than 25%.

5.  The method of claim 3 wherein with a beam radius to overlap ratio of said spot images of adjacent addressable dots of the step of maintaining a spot image is between 2.0 to 4.0.

6.  The method of claim 3 wherein said charge density of the step developing a charge density is greater than 90% of a surface charge capacity of said charged photoreceptor.

7.  The improved method of claim 2 wherein said deposition profile of charged toner attracted to said selectively discharged addressable dots is such that said plurality of color separation toner images are comprised of low contrast, overlapping gravure dot cells having relatively high inter-cell deposition.

8.  The method of claim 7 wherein for a gravure dot cell having an equal solid area color value as an equivalent gravure press printed cell, said gravure dot cell replicates tint color of said equivalent gravure press printed cell to within 6 $\Delta$E value for cyan, magenta and yellow inks.

9.  The method of claim 7 wherein said gravure clustered dot cells have ink thicknesses which vary between 20% up to 100% of a maximum ink thickness for tonal intensity values between 2% thru 70%, and wherein said gravure clustered dot cells also have graduated edge profiles such that some thickness of ink begins to cover all of an area between adjacent ones of said clustered dot cells for tonal intensity values of greater than 50%.

FIG. 1

EP 0 601 933 A2

FIG. 2a
PRIOR ART

FIG. 2b

FIG.3

FIG. 4a

200    200'

FIG. 4b

200    200'

FIG. 4c

200    200'

**FIG. 5a**
PRIOR ART

**FIG. 5b**
PRIOR ART

**FIG. 5c**
PRIOR ART